# EUROPEAN PATENT SPECIFICATION

(11) **EP 0 775 723 B1**
(45) Date of publication and mention of the grant of the patent: **17.02.1999**
(21) Application number: 95118618.8
(22) Date of filing: 27.11.1995
(51) Int. Cl.: C08K 5/52, C07F 9/6574

(54) **Phosphite compounds and synthetic resin compositions containing the same**
Phosphit-Verbindungen und synthetische Kunststoffzusammensetzungen, die sie enthalten
Composés phosphites et résines synthétiques les contenant

(43) Date of publication of application: 28.05.1997
(73) Proprietor: ASAHI DENKA KOGYO KABUSHIKI KAISHA, Arakawa-ku Tokyo (JP)
(72) Inventor: Haruna, Tohru, c/o Asahi Denka Kogyo K.K., Urawa-shi, Saitama-ken (JP); Takahashi, Masayuki, c/o Asahi Denka Kogyo K.K., Urawa-shi, Saitama-ken (JP); Tobita, Etsuo, c/o Asahi Denka Kogyo K.K., Urawa-shi, Saitama-ken (JP); Hamada, Rieko, c/o Asahi Denka Kogyo K.K., Urawa-shi, Saitama-ken (JP)
(74) Representative: Boeters, Hans Dietrich, Dr.

(56) References cited:
- EP-A- 0 002 821
- GB-A- 2 087 399
- US-A- 4 670 492

## Description

### BACKGROUND OF THE INVENTION

### [Field of the Invention]

This invention relates to a novel phosphite compound, and a stabilized synthetic resin composition, to which the phosphite compound has been added.

### [Description of the Related Art]

Heretofore, by virtue of their good mechanical and chemical characteristics, synthetic resins, such as polyethylene, polypropylene, ABS, and polyvinyl chloride resins, have found wide applications in packaging containers, packaging films, interior and exterior trim parts for automobiles, construction materials, agricultural materials, household appliances, and the like. However, these synthetic resins are exposed to high temperatures during the molding processes and undergo deterioration due to light, heat, and moisture during the distribution and the use. As a result, it becomes impossible for the synthetic resins to be applied to practical use due to their coloring and a decrease in their mechanical strengths.

In order to prevent such deterioration of the synthetic resins, various additives have heretofore been proposed and utilized alone or in combination. Among the proposed additives, phosphite compounds have found wide application owing to their advantages in that they can impart heat-resistance and light-resistance to the synthetic resins and can restrict coloring of the synthetic resins.

Among the phosphite compounds, cyclic phosphite compounds have been known to have comparatively large effects. Various cyclic phosphite compounds have been proposed in, for example, Japanese Unexamined Patent Publication Nos. 55(1980)-151058, 57(1982)-114595, 58(1983)-103537, 58(1983)-152029, 5(1993)-25321, and 6(1994)-1880.

However, the compounds described above have the drawbacks in that they have a low compatibility with the synthetic resins and cannot easily be blended uniformly with the synthetic resins during the processing, and in that their effects are often lost within a comparatively short time span. In particular, the effects of the compounds described above are often lost quickly under the outdoor conditions or in a wet atmosphere. The effects of the compounds described above are also lost when the synthetic resins are processed at high temperatures. Therefore, the compounds described above are not satisfactory for practical use.

### SUMMARY OF THE INVENTION

In view of the above circumstances, the inventors eagerly carried out extensive research and found that the heat-resistance, the weatherability, and the processing characteristics of synthetic resins can be improved markedly by adding a specific phosphite compound to the synthetic resins. The present invention is based on such findings.

Specifically, the present invention provides a phosphite compound, which may be represented by the following general formula (I): 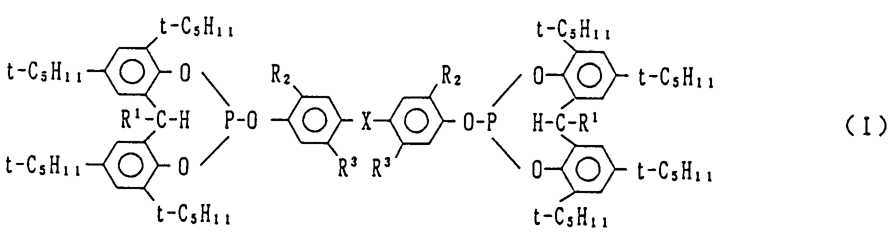 wherein R¹ represents a hydrogen atom or a methyl group, R² represents a hydrogen atom or an alkyl group having 1 to 5 carbon atoms, R³ represents a hydrogen atom or an alkyl group having 1 to 5 carbon atoms, and X represents an alkylidene group having 1 to 8 carbon atoms.

The present invention also provides a stabilized synthetic resin composition containing a phosphite compound, which may be represented by the aforesaid general formula (I), in a proportion falling within the range of 0.005 to 5 parts by weight per 100 parts by weight of the synthetic resin.

### DETAILED DESCRIPTION OF THE INVENTION

The phosphite compound in accordance with the present invention will hereinbelow be described in further detail.

Examples of the alkyl groups represented by R² and R³ in the aforesaid general formula include methyl, ethyl, propyl, isopropyl, butyl, tertiary butyl, amyl, and tertiary amyl groups.

Examples of the alkylidene groups represented by X include methylene, ethylidene, propylidene, butylidene, pentylidene, hexylidene, heptylidene, and octylidene groups.

Therefore, as the examples of the phosphite compounds represented by the aforesaid general formula (I) in accordance with the present invention, the compounds listed below may be mentioned.

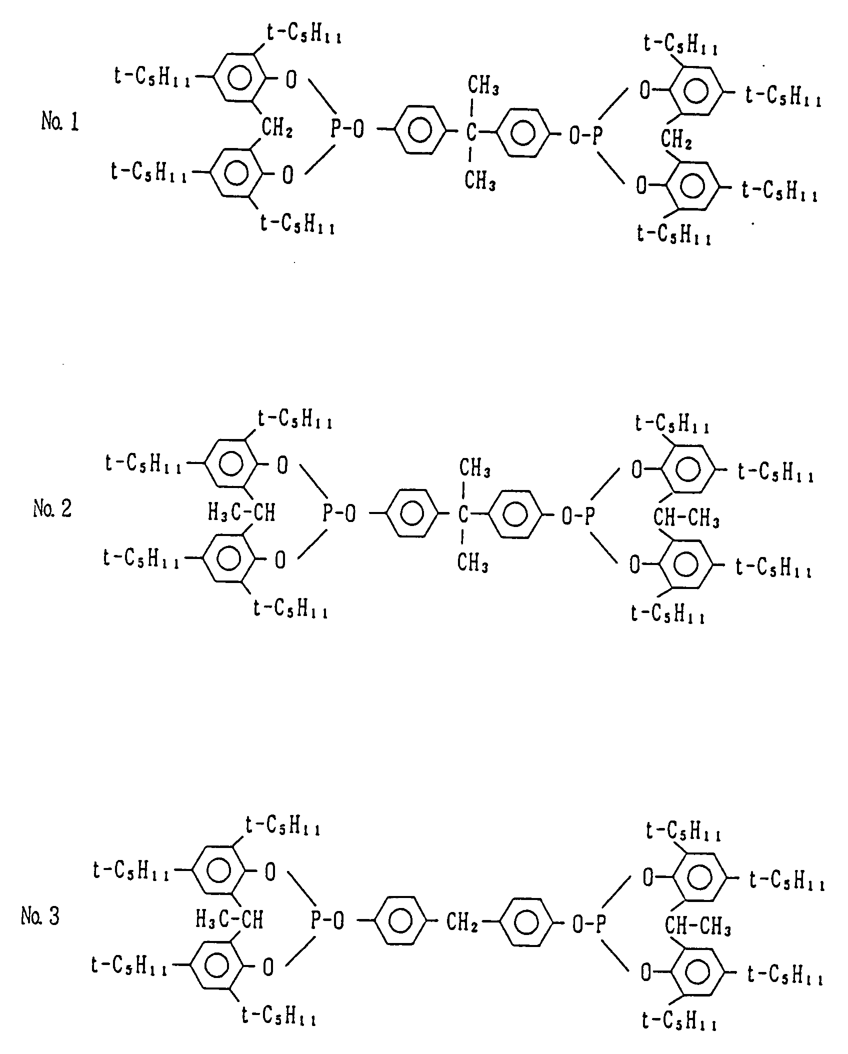

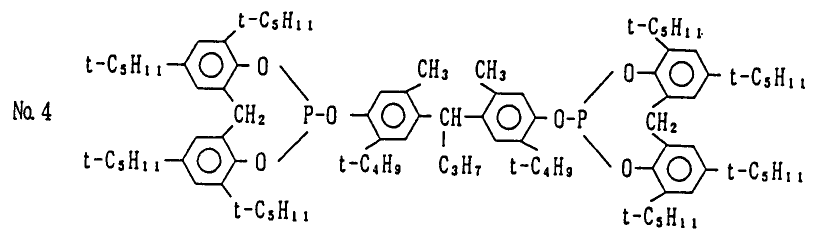

The phosphite compounds described above can be synthesized easily from 2,2'-alkylidenebis(4,6-di-*tert*-amylphenol) and 4,4'-alkylidenebisphenol.

The synthetic resin composition in accordance with the present invention is obtained by adding the phosphite compound in accordance with the present invention in a proportion of 0.005 to 5 parts by weight per 100 parts by weight of the synthetic resin, preferably in a proportion of 0.01 to 3 parts by weight per 100 parts by weight of the synthetic resin. If the amount of the phosphite compound added is smaller than this range, the stabilizing effects cannot be obtained. If the amount of the phosphite compound added is larger than this range, the value of the resin as the article of commerce will be lost due to blooming.

Examples of the synthetic resins, the stability of which is to be improved in accordance with the present invention, include thermoplastic resins, such as monopolymers or copolymers of α-olefins, e.g., high-density, low-density, or straight-chain low-density polyethylenes, polypropylenes, polybutenes-1, poly-3-methylpentenes, poly-4-methylpentenes, and ethylene-propylene copolymers; copolymers of these α-olefins and poly-unsaturated compounds, e.g., conjugated dienes or non-conjugated dienes, acrylic acid, methacrylic acid, or vinyl acetate; halogen-containing resins, such as polyvinyl chlorides, polyvinylidene chlorides, chlorinated polyethylenes, chlorinated polypropylenes, polyvinylidene fluorides, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, a vinyl chloride-acrylic acid ester copolymer, vinyl chloride-maleic acid ester copolymers, vinyl chloride-cyclohexyl maleimide copolymers, vinyl chloride-cyclohexyl maleimide copolymers; petroleum resins; coumarone resins; polystyrenes; polyvinyl acetates; acrylic resins; copolymers of styrene and/or α-methylstyrene and other monomers (e.g., maleic anhydride, phenyl maleimide, methyl methacrylate, butadiene, and acrylonitrile), such as AS resins, ABS resins, MBS resins, and high-temperature ABS resins; straight-chain polyesters, such as polymethyl methacrylates, polyvinyl alcohols, polyvinyl formals, polyvinyl butyrals, polyethylene terephthalates, and polytetramethylene terephthalates; aromatic polyesters; polyacrylates; polyphenylene oxides; polyamides, such as polycaprolactams and polyhexamethylene adipamides; polyimides; straight-chain or branched polycarbonates; polyacetals; polyphenylene sulfides; polysulfones; polyether sulfones; polyether ketones; polyether ether ketones, polyurethanes, and cellulose types of resins. Examples of the synthetic resins also include thermoset resins, such as phenol resins, urea resins, melamine resins, epoxy resins, and unsaturated polyester resins; and elastomers, such as isoprene rubbers, butadiene rubbers, acrylonitrile-butadiene copolymer rubbers, styrene-butadiene copolymer rubbers, copolymer rubbers of ethylene and α-olefins, such as propylene and butene-1, and ternary copolymer rubbers of ethylene-α-olefins, ethylidene norbornene, and non-conjugated dienes, e.g. cyclopentadiene. Examples of the synthetic resins further include alloys or blends of the above-enumerated resins and/or elastomers.

Together with the aforesaid phosphite compound, the composition in accordance with the present invention may also contain ordinarily used additives, such as anti-oxidants, ultraviolet light absorbers, and stabilizers.

Particularly preferable additives include the anti-oxidants, such as phenol type, sulfur type, and phosphite type of agents, the ultraviolet light absorbers, and hindered amine type of light stabilizers.

Examples of the phenol type of anti-oxidants include 2,6-di-*tert*-butyl-p-cresol, 2,6-diphenyl-4-octadecyloxyphenol, stearyl(3,5-di-*tert*-butyl-4-hydroxyphenyl)-propionate, distearyl(3,5-di-*tert*-butyl-4-hydroxybenzyl)phosphonate, thiodiethylene glycol bis[(3,5-di-*tert*-butyl-4-hydroxyphenyl)propionate], 1,6-hexamethylene-bis[(3,5-di-*tert*-butyl-4-hydroxyphenyl)-propionate], 1,6-hexamethylene-bis[(3,5-di-*tert*-butyl-4-hydroxyphenyl) propionic acid amide], 4,4'-thio-bis(6-*tert*-butyl-m-cresol), 2,2'-methylene-bis(4-methyl-6-*tert*-butylphenol), 2,2'-methylene-bis(4-ethyl-6-*tert*-butylphenol), bis[3,3-bis(4-hydroxy-3-*tert*-butylphenyl)butyric acid] glycol ester, 4,4'-butylidene-bis(6-*tert*-butyl-m-cresol), 2,2'-ethylidene-bis(4,6-di-*tert*-butylphenol), 2,2'-ethylidene-bis(4-*sec*-butyl-6-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)-phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimeth ylbenzene, 1,3,5-tris[(3,5-di-*tert*-butyl-4-hydroxyphenyl)propionyloxyethyl]isocyanurate, tetrakis(methylene-3-(3',5'-di-*tert*-butyl-4'-hydroxyphenyl)propionate]-methane, 2-*tert*-butyl-4-methyl-6-(2-acryloyloxy-3-*tert*-butyl-5-methylbenzyl)phenol, 3,9-bis[1,1-dimethyl-2-{(3-*tert*-butyl-4-hydroxy-5-methylphenyl)propionyloxy}ethyl]-2,4,8,10-tetraoxaspiro[5. 5]undecane, and triethylene glycol bis[3-*tert*-butyl-4-hydroxy-5-methyl-phenyl)propionate.

Examples of the sulfur type of anti-oxidants include dialkyl thiodipropionates, such as dilauryl thiodipropionate, dimyristyl thiodipropionate, and distearyl thiodipropionate; and β-alkylmercaptopropionic acid esters of polyols, such as pentaerythritol tetra (β-dodecylmercaptopropionate).

Examples of the phosphite type of anti-oxidants include tris(nonylphenyl) phosphite, tris(2,4-di-*tert*-butyiphenyl) phosphite, tris [2-*tert*-butyl-4-(3-*tert*-butyl-4-hydroxy-5-methylphenylthio)-5-methyl-phenyl] phosphite, tridecyl phosphite, octyldiphenyl phosphite, di(decyl)monophenyl phosphite, di(tridecyl)pentaerythritol diphosphite, distearylpentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, tetra(tridecyl)isopropylidenediphenol diphosphite, tetra(tridecyl)-4,4'-n-butylidenebis(2-*tert*-butyl-5-methylphenol) diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphite, and 2,2'-methylenebis(4,6-di-*tert*-butylphenyl)(octyl) phosphite.

Examples of the ultraviolet light absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl) benzotriazoles, such as 2-(2'-hydroxy-5'-methylphenyl)benzotriazole, 2-(2'-hydroxy-3',5'-di-*tert*-butylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl)benzotriazole, 2-(2'-hydroxy-3',5'-dicumylphenyl)benzotriazole, and 2-(2'-methylene-bis(4-*tert*-octyl-6-benzotriazolyl)-phenol; benzoates, such as phenyl salicylate, resorcinol mono-benzoate, 2,4-di-*tert*-butylphenyl-3'5'-di-*tert*-butyl-4'-hydroxy benzoate, and hexadecyl-3,5-di-*tert*-butyl-4-hydroxy benzoate; substituted oxanilides, such as 2-ethyl-2'-ethoxyoxanilide and 2-ethoxy-4'-dodecyloxanilide; and cyano acrylates, such as ethyl-α-cyano-β, β-diphenyl acrylate, and methyl-2-cyano-3-methyl-3-(p-methoxyphenyl) acrylate.

Examples of the hindered amine type of light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, N-(2,2,6,6-tetramethyl-4-piperidyl)dodecylsuccinic acid imide, 1-[3,5-di-*tert*-butyl-4-hydroxyphenyl)propionyloxyethyl]-2,2,6,6-tetramethyl-4-piperidyl-(3,5-di-*tert*-butyl-4-hydroxyphenyl) propionate, bis(2,2,6,6-tetramethyl-4-piperidyl) sebacate, bis(1,2,2,6,6-pentamethyl-4-piperidyl) sebacate, bis(1,2,2,6,6-pentamethyl-4-piperidyl)-2-butyl-2-(3,5-di-*tert*-butyl-4-hydroxybenzyl)malonate, N,N'-bis(2,2,6,6- tetramethyl-4-piperidyl) hexamethylenediamine, tetrakis(2,2,6,6-tetramethyl-4-piperidyl)butane tetracarboxylate, tetrakis(1,2,2,6,6-pentamethyl-4-piperidyl)butane tetracarboxylate, bis(2,2,6,6-tetramethyl-4-piperidyl)·di-(tridecyl)butane tetracarboxylate, bis(1,2,2,6,6-pentamethyl-4-piperidyl)·di(tridecyl)butane tetracarboxylate, 3,9-bis[1,1-dimethyl-2-{tris(2,2,6,6-tetramethyl-4-piperidyloxycarbonyloxy)butylcarbonyloxy}ethyl]-2,4,8,10-tetraoxaspiro[5. 5]undecane, 3,9-bis[1,1-dimethyl-2-{tris(1,2,2,6,6-pentamethyl-4-piperidyloxy carbonyloxy)butylcarbonyloxy}ethyl)-2,4,8,10-tetraoxaspiro[5. 5]undecane, 1,5,8,12-tetrakis[4,6-bis{N-(2,2,6,6-tetramethyl-4-piperidyl)butylamino}-1,3,5-triazin-2-yl]-1,5,8,12-tetraazadodecane, a 1-(2-hydroxyethyl)-2,2,6,6-tetramethyl-4-piperidinol/dimethyl succinate condensate, a 2-*tert*-octylamino-4,6-dichloro-s-triazine/N,N'-bis(2,2,6,6-tetramethyl-4-piperidyl) hexamethylenediamine condensate, and an N,N'-bis(2,2,6,6-tetramethyl-4-piperidyl) hexamethylenediamine/dibromoethane condensate.

Further, when necessary, the composition in accordance with the present invention may be added with heavy metal inactivation agents, nucleating agents, metallic soaps, organotin compounds, plasticizing agents, epoxy compounds, foaming agents, antistatic agents, flame retardants, lubricating agents, processing aids, and the like.

The composition in accordance with the present invention can be used satisfactorily in applications, in which a high weatherability is required over a long period of time, such as the applications to agricultural materials, and paints and interior and exterior trim parts for automobiles. The composition in accordance with the present invention can also be used satisfactorily in applications to foodstuff packaging, medical materials, and the like, which are exposed to radiation. For example, the composition in accordance with the present invention can be used as films, fibers, tapes, sheets, various molding materials, paints, binders for lacquers, adhesive agents, putties, and basic materials for photographic materials.

### Examples

The present invention will further be illustrated by the following nonlimitative examples.

### Synthetic Example

### Synthesis of No. 1 compound:

One gram (10 milli-mols) of triethylamine was added to 19.2 g (47 milli-mols) of 2,2'-methylenebis(4,6-di-*tert*-amylphenol) and 50 milliliters of a hydrocarbon type of solvent (Exxon Naphtha No. 5 supplied by Exxon Chemical Japan, Ltd., which contained 26.4% of a naphthenic hydrocarbon, 58.0% of a paraffinic hydrocarbon, and 15.6% of an aromatic hydrocarbon and had a boiling point of 154°C to 197°C). Thereafter, 7.1 g (52 milli-mols) of phosphorus trichloride was added dropwise to the resulting mixture under stirring at 60°C. The reaction liquid was heated to 135°C and kept at that temperature for six hours. Thereafter, the pressure was reduced, and an excess of phosphorus trichloride was removed. The reaction liquid was then cooled down to 30°C, and 5.34 g (23 milli-mols) of bisphenol A was added. After stirring, 5.75 g (56 milli-mols) of triethylamine was added dropwise over two hours at 100°C, and the reaction was carried out for 12 hours at 120°C. After cooling, the formed triethylamine hydrochloride was removed by filtration, and 30 milli-liters of the solvent was removed by distillation under reduced pressure. In this manner, 17.9 g (yield: 69%) of white powder having a melting point of 188°C to 190°C was obtained.

### Example 1

Three grams of each of the test compounds (phosphorus types of anti-oxidants) listed in Table 3 were weighed out onto a laboratory dish. The test compounds were put into a desiccator at 50°C and at a humidity of 100%, and their weights were measured at intervals of two days. The number of days, which elapsed before an increase in weight of at least 3% was found, was taken as a value indicating the hydrolysis-resistance.

The results shown in table 3 were obtained.

As comparative compounds, those listed below were used. In the comparative compounds 3 and 4, R represented *tert*-butyl or *tert*-amyl.

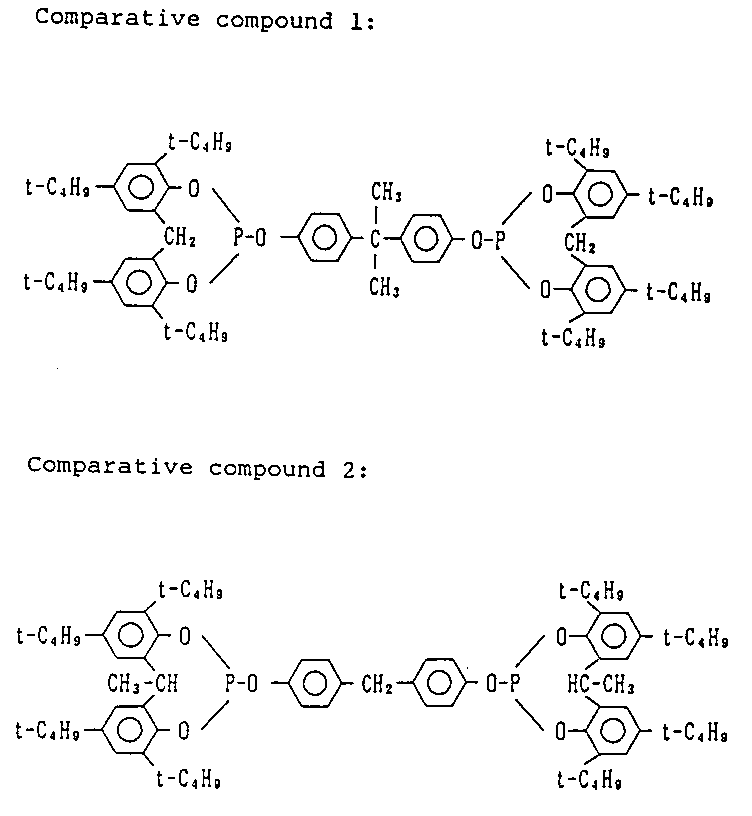

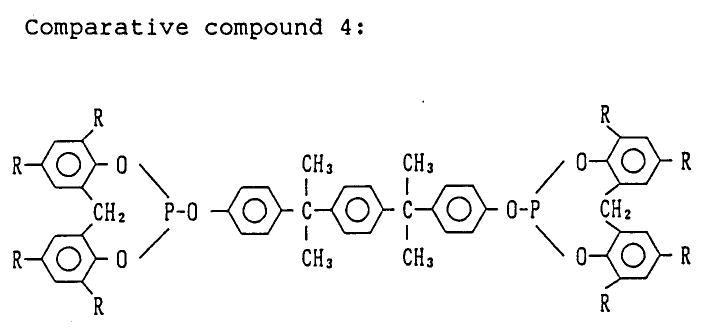

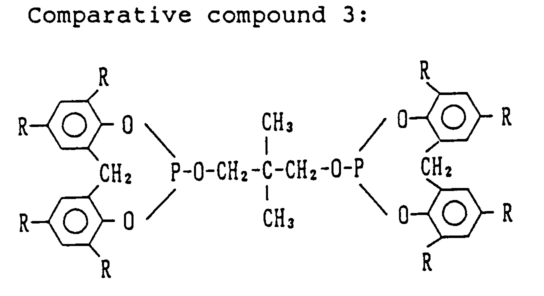

### Example 2

The weight reduction temperatures of the test compounds listed in Table 3 were measured with the differential thermal analysis (temperature rise rate: 10°C/minute, air: 150 ml/minute). The 20% weight reduction temperature was taken as a value indicating the heat-resistance. The results shown in Table 3 were obtained.

### Example 3

In order to investigate the stabilizing effects at the time of high-temperature processing, compositions were prepared in accordance with the formulations shown in Table 1. Each of the compositions was extruded at 300°C. As for the composition after being extruded one time and the composition after being extruded five times, the melt indexes were measured. The ratio of the melt index of the composition after being extruded five times to the melt index of the composition after being extruded one time was taken as a value indicating the processing stability.

The results shown in Table 3 were obtained.

**Table 1**

| Composition | Parts by weight |
|---|---|
| Unstabilized polypropylene resin | 100 |
| Calcium stearate | 0.05 |
| Tetrakis[methylene-3-(3',5'-di-*tert*-butyl-4'-hydroxyphenyl)propionate]methane | 0.1 |
| Test compound (Table 3) | 0.1 |

### Example 4

Each of the compositions prepared in accordance with the formulations shown in Table 2 was kneaded with a mixing roll at 150°C for five minutes. Thereafter, each composition was subjected to compression molding for five minutes under the conditions of 150°C and 180 kg/cm², and a sheet having a thickness of 1.0 mm was prepared. Test pieces having a size of 10 x 20 mm were formed from the sheet and put in a desiccator at 80°C and at a humidity of 100% for seven days. Thereafter, the sheet surfaces were observed with a microscope, and blooming characteristics were rated on a scale from 1 to 5 (1: no blooming was observed, ... 5: blooming was observed over the entire surface of the sheet).

The results shown in Table 3 were obtained.

**Table 2**

| Composition | Parts by weight |
|---|---|
| Unstabilized straight-chain low-density polyethylene (MI=1.0) | 100 |
| Tetrakis[methylene-3-(3',5'-di-*tert*-butyl-4'-hydroxyphenyl)propionate]methane | 0.05 |
| DHT-4A ^{*1} | 0.1 |
| Test compound (Table 3) | 0.1 |

| | |
|---|---|
| *1: Synthetic hydrotalcite Mg_{4.5}Al₂(OH)₁₃CO₃·3.5H₂O supplied by Kyowa Kagaku Kogyo K.K. | |

**Table 3**

| | Test compound | | Hydrolysis-resistance (days) | Heat-resistance (°C) | Processing stability | Blooming |
|---|---|---|---|---|---|---|
| | | R | | | | |
| | Comparative compound 3 | tert-Butyl | 70 | 373 | 1.4 | 5 |
| | | tert-Amyl | 70 | 380 | 1.6 | 3 |
| | Comparative compound 4 | tert-Butyl | 92 | 412 | 1.5 | 4 |
| | | tert-Amyl | 92 | 409 | 1.6 | 3 |
| | Comparative compound 1 | | 92 | 411 | 1.5 | 4 |
| | Comparative compound 2 | | 94 | 410 | 1.7 | 4 |
| Ex. | Compound No.1 | | 92 | 411 | 1.3 | 1 |
| | Compound No.3 | | 94 | 411 | 1.4 | 1 |

### Example 5

Each of the compositions prepared in accordance with the formulations shown in Table 4 was extruded at 200°C in order to form pellets. The pellets were then subjected to injection processing at 230°C, and test pieces were thereby obtained. The test pieces were heated for 48 hours in a Geer oven at 135°C. As for the test pieces having thus been heated, the Izod impact value at 20°C was measured. The Izod impact value thus obtained was compared with the original Izod impact value, and the retention of the Izod impact value was calculated.

The results shown in Table 5 were obtained.

**Table 4**

| Composition | Parts by weight |
|---|---|
| ABS resin (Stylac 200 supplied by Asahi Chemical Industry Co., Ltd.) | 100 |
| Calcium stearate | 1.0 |
| Test compound (Table 5) | 0.3 |

**Table 5**

| No. | Test compound | Retention (%) of Izod impact value |
|---|---|---|
| Comparative Ex. | | |
| 5-1 | Comparative compound 1 | 68.6 |

| Example | | |
|---|---|---|
| 5-1 | No. 1 compound | 89.7 |
| 5-2 | No. 2 compound | 91.1 |
| 5-3 | No. 3 compound | 90.4 |

### Example 6

Each of the compositions prepared in accordance with the formulations shown in Table 6 was pressed at 260°C, and colorless test pieces having a thickness of 1.0 mm were thereby prepared. The test pieces were heated for 30 minutes in a Geer oven at 230°C. Before the test pieces were thus heated and after they had thus been heated, their discoloration was observed and rated on a scale from 1 to 10. The rate of 1 indicated that no discoloration occurred, the larger rate values indicating higher degrees of discoloration.

The results shown in Table 7 were obtained.

**Table 6**

| Composition | Parts by weight |
|---|---|
| Polycarbonate resin | 100 |
| Test compound (Table 7) | 0.1 |

**Table 7**

| No. | Test compound | Discoloration | |
|---|---|---|---|
| | | Before heating | After heating |
| Comparative Ex. | | | |
| 6-1 | None | 3 | 10 |
| 6-2 | Comparative compound 2 | 1 | 6 |

| Example | | | |
|---|---|---|---|
| 6-1 | No. 1 compound | 1 | 3 |
| 6-2 | No. 2 compound | 1 | 2 |
| 6-3 | No. 3 compound | 1 | 3 |

### Example 7

Each of the compositions prepared in accordance with the formulations shown in Table 8 was processed with a kneading roll, and sheets having a thickness of 1mm were thereby prepared. As for the sheets, a heat stability test was carried out in a Geer oven at 190°C. Also, a weatherability test was carried out by using a weatherometer.

The results shown in Table 9 were obtained.

**Table 8**

| Composition | Parts by weight |
|---|---|
| Polyvinyl chloride (Vinyca 37H supplied by Mitsubishi Monsanto Kasei K.K.) | 100 |
| Di-2-ethylhexyl phthalate | 45 |
| Tricresyl phosphate | 3.0 |
| Bisphenol A · diglycidyl ether | 2.0 |
| Zinc stearate | 0.8 |
| Barium stearate | 0.4 |
| Barium nonyl phenate | 0.5 |
| Octyldiphenyl phosphite | 0.5 |
| Sorbitan monopalmitate | 3.0 |
| Methylenebisstearylamide | 0.3 |
| 2-Hydroxy-4-n-octoxybenzophenone | 0.3 |
| Test compound (Table 9) | 0.3 |

**Table 9**

| No. | Test compound | Heat stability (minutes) | Weatherability (hours) |
|---|---|---|---|
| Comparative Ex. | | | |
| 7-1 | None | 60 | 2,200 |
| 7-2 | Comparative compound 1 | 120 | 3,400 |

| Example | | | |
|---|---|---|---|
| 7-1 | No. 1 compound | 160 | 4,600 |
| 7-2 | No. 2 compound | 160 | 4,700 |
| 7-3 | No. 3 compound | 150 | 4,500 |

As is clear from Table 3, the specific phosphite compounds in accordance with the present invention exhibit a high hydrolysis-resistance, a high heat-resistance, good processing stability, and particularly good anti-blooming characteristics.

On the other hand, the comparative compounds 1, 2, and 4, which are cyclic phosphites having the triaryl phosphite structures, exhibit a high hydrolysis-resistance and a high heat-resistance, but have low processing stability and low anti-blooming characteristics. Also, the comparative compound 3 has a low hydrolysis-resistance, a low heat-resistance, and low anti-blooming characteristics, although the comparative compound 3, wherein R represents a tertiary-butyl group, has good processing stability.

As described above, by adding the specific phosphite compound (the phosphorus type of anti-oxidant) to the synthetic resin, the synthetic resin composition can be obtained which exhibits little reduction in the performance even under the high-temperature processing conditions and in a wet atmosphere and which has good processing stability and good anti-blooming characteristics.

## Claims

1. A phosphite compound, which may be represented by the following general formula (I): 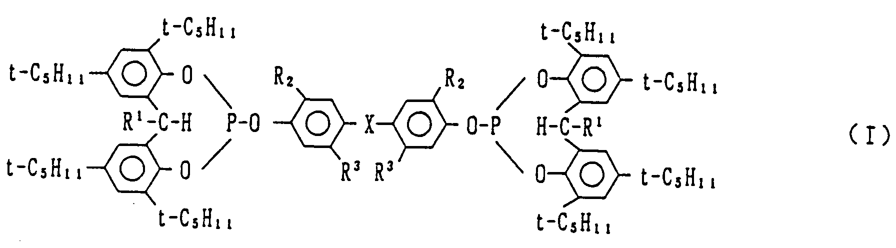 wherein R¹ represents a hydrogen atom or a methyl group, R² represents a hydrogen atom or an alkyl group having 1 to 5 carbon atoms, R³ represents a hydrogen atom or an alkyl group having 1 to 5 carbon atoms, and X represents an alkylidene group having 1 to 8 carbon atoms.

2. A phosphite compound as defined in Claim 1 wherein each of R¹, R², and R³ represents a hydrogen atom.

3. A phosphite compound as defined in Claim 2 wherein X represents an isopropylidene group.

4. A stabilized synthetic resin composition containing a phosphite compound, which may be represented by the following general formula (I): 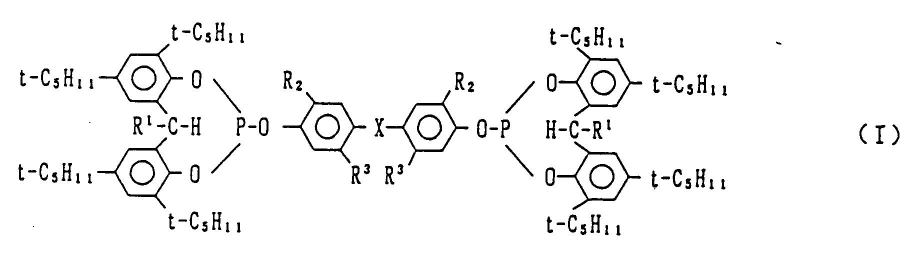 wherein R¹ represents a hydrogen atom or a methyl group, R² represents a hydrogen atom or an alkyl group having 1 to 5 carbon atoms, R³ represents a hydrogen atom or an alkyl group having 1 to 5 carbon atoms, and X represents an alkylidene group having 1 to 8 carbon atoms,
said phosphite compound being contained in a proportion falling within the range of 0.005 to 5 parts by weight per 100 parts by weight of the synthetic resin.

5. A synthetic resin composition as defined in Claim 4 wherein said synthetic resin is a polyolefin resin.

6. A synthetic resin composition as defined in Claim 5 wherein said synthetic resin is a polypropylene.

7. A synthetic resin composition as defined in Claim 4 wherein said phosphite compound is represented by the general formula (I), in which each of R¹, R², and R³ represents a hydrogen atom.

8. A synthetic resin composition as defined in Claim 7 wherein said phosphite compound is represented by the general formula (I), in which X represents an isopropylidene group.

## Patentansprüche

1. Phosphit-Verbindung, die durch die folgende allgemeine Formel (I) dargestellt werden kann: 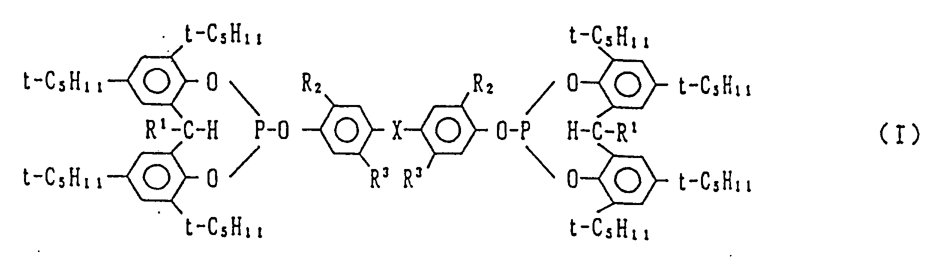 worin R¹ ein Wasserstoffatom oder eine Methylgruppe darstellt, R² ein Wasserstoffatom oder eine Alkylgruppe mit 1 bis 5 Kohlenstoffatomen darstellt, R³ ein Wasserstoffatom oder eine Alkylgruppe mit 1 bis 5 Kohlenstoffatomen darstellt und X eine Alkylidengruppe mit 1 bis 8 Kohlenstoffatomen darstellt.

2. Phosphit-Verbindung nach Anspruch 1, worin jedes R¹, R² und R³ ein Wasserstoffatom darstellt.

3. Phosphit-Verbindung nach Anspruch 2, worin X eine Isopropylidengruppe darstellt.

4. Stabilisierte synthetische Harzzusammensetzung, die eine Phosphit-Verbindung enthält, welche durch die folgende allgemeine Formel (I) dargestellt werden kann; 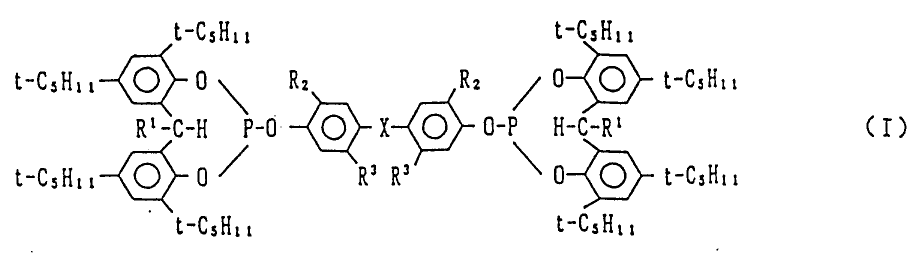 worin R¹ ein Wasserstoffatom oder eine Methylgruppe darstellt, R² ein Wasserstoffatom oder eine Alkylgruppe mit 1 bis 5 Kohlenstoffatomen darstellt, R³ ein Wasserstoffatom oder eine Alkylgruppe mit 1 bis 5 Kohlenstoffatomen darstellt und X eine Alkylidengruppe mit 1 bis 8 Kohlenstoffatomen darstellt,
wobei die Phosphit-Verbindung in einem Anteil enthalten ist, die im Bereich von 0,005 bis 5 Gewichtsteilen pro 100 Gewichtsteile des synthetischen Harzes liegt.

5. Synthetische Harzzusammensetzung nach Anspruch 4, worin das synthetische Harz ein Polyolefinharz ist.

6. Synthetische Harzzusammensetzung nach Anspruch 5, worin das synthetische Harz ein Polypropylen ist.

7. Synthetische Harzzusammensetzung nach Anspruch 4, worin die Phosphit-Verbindung durch die allgemeine Formel (I) dargestellt wird, worin jedes R¹, R² und R³ ein Wasserstoffatom darstellt.

8. Synthetische Harzzusammensetzung nach Anspruch 7, worin die Phosphit-Verbindung durch die allgemeine Formel (I) dargestellt wird, wobei X eine Isopropylidengruppe darstellt.

## Revendications

1. Composé de type phosphite qui peut être représenté par la formule générale suivante (I) : 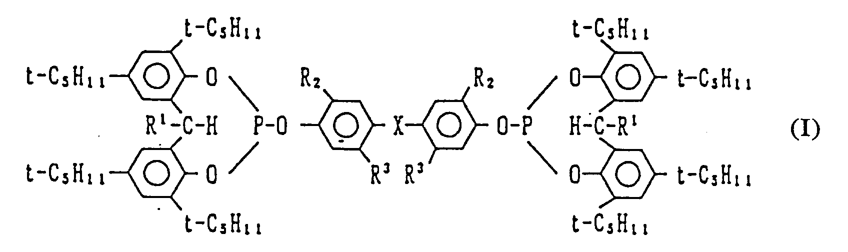 dans laquelle R¹ représente un atome d'hydrogène ou un groupe méthyle, R² représente un atome d'hydrogène ou un groupe alkyle comportant de 1 à 5 atomes de carbone, R³ représente un atome d'hydrogène ou un groupe alkyle comportant de 1 à 5 atomes de carbone, et X représente un groupe alkylidène comportant de 1 à 8 atomes de carbone.

2. Composé de type phosphite selon la revendication 1, dans lequel chacun des R¹, R² et R³ représente un atome d'hydrogène.

3. Composé de type phosphite selon la revendication 2, dans lequel X représente un groupe isopropylidène.

4. Composition de résine synthétique stabilisée contenant un composé de type phosphite, qui être représenté par la formule générale suivante (I) : 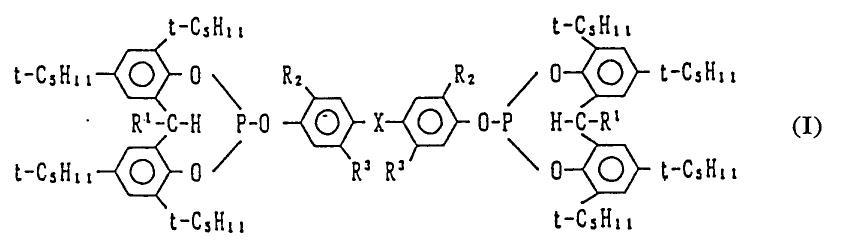 dans laquelle R¹ représente un atome d'hydrogène ou un groupe méthyle, R² représente un atome d'hydrogène ou un groupe alkyle comportant de 1 à 5 atomes de carbone, R³ représente un atome d'hydrogène ou un groupe alkyle comportant de 1 à 5 atomes de carbone, et X représente un groupe alkylidène comportant de 1 à 8 atomes de carbone, ledit composé de type phosphite étant contenu en une proportion qui se situe dans l'intervalle allant de 0,005 à 5 parties en poids pour 100 parties en poids de résine synthétique.

5. Composition de résine synthétique selon la revendication 4, dans laquelle ladite résine synthétique est une résine polyoléfine.

6. Composition de résine synthétique selon la revendication 5, dans laquelle ladite résine synthétique est un polypropylène.

7. Composition de résine synthétique selon la revendication 4, dans laquelle ledit composé de type phosphite est représenté par la formule générale (I) dans laquelle chacun des R¹, R² et R³ représente un atome d'hydrogène.

8. Composition de résine synthétique selon la revendication 7, dans laquelle ledit composé de type phosphite est représenté par la formule générale (I) dans laquelle X représente un groupe isopropylidène.
